# EUROPEAN PATENT APPLICATION

(11) **EP 1 549 101 A2**
(43) Date of publication of application: **29.06.2005**
(21) Application number: 04257747.8
(22) Date of filing: 14.12.2004
(51) Int. Cl.: H04Q 9/00

(54) **Wireless probe management system**

(30) Priority: 16.12.2003 US 736653
(71) Applicant: Agilent Technologies, Inc., Palo Alto, CA 94306 (US)
(72) Inventor: Burch, Jefferson B., Palo Alto, California 94306 (US); Hamilton, Bruce, Menlo Park, California 94025 (US); Engel, Glenn R., Snohomish, Washingont 98290 (US); Purdy, Glen L., Snohomish, Washington 98290 (US); Liu, Jerry J., Sunnyvale, California 94086 (US); Eidson, John C., Palo Alto, California 94303 (US)
(74) Representative: Tollett, Ian

(57) **Abstract**

A probe management system 30 has a central location 100, 300 for developing experiments and measurement requests for the particular probe system. Instead of issues detailed measurement requests to each of the smart probes 112-140, 202-215, 317-334 in the system, each smart probe determines the measurements to be taken based on the experiment and measurement request. Furthermore, prior to participating in such an experiment the smart probe determines its capabilities to participate and configures itself for such participation if the smart decides to actually participate in the experiment or measurement request.

## Description

The present invention relates, in general, to a monitoring system and to a method for monitoring a measurement system and, more specifically, to management of probe measurements communicated over wireless networks.

As long as systems have been implemented to perform certain tasks, measurement, diagnostic, and analysis systems have been employed to measure and analyze the operation and effectiveness of those systems. Control systems found in factories control the processing or manufacturing occurring in those factories. Diagnostic systems are typically in place to measure the effectiveness of the control systems, checking them for errors, failures, or other anomalies. In the context of a factory, the diagnostic system is typically contained within the manageable confines of the factory with a known number of probes in known locations, and performing known measurement or diagnostic tasks. The ability to centrally manage a set number of probes in known locations and performing known tasks does not generally present a complex, dynamic undertaking, considering the few unknowns encountered in the measurement, diagnostic, and analysis process.

In a larger application, the telephone system, which stretches across the globe, includes a large number of components operating to provide a guaranteed connection between calling parties. In the modern telecommunications system of North America, a signaling protocol, referred to as Signaling System Seven (SS7), has been implemented to control provision of telephone communications. An important aspect to maintaining a reliable communication system is monitoring the signaling traffic and the network responses to signaling commands issued for establishing phone calls. A large monitoring system is currently in place that monitors the SS7 message traffic between telephone switches and other telecommunication components and aggregates that information up through several different layers of servers to analyze various operations of the telephone system. Such monitoring maybe used for such tasks as determining malfunctions in the network, detecting fraud, or other such operations within the telephone system.

The SS7 monitoring system stretches across the North American telephone system. A large number of monitors or probes are positioned within the network at switches, central offices, and the like, to detect, intercept, or eavesdrop on the signaling messages being routed around the network. Because these probes are typically at known locations and perform known tasks, management of the probes is usually not much different than the example of the factory diagnostic system, except in terms of scale. Similar large-scale applications may include the network of hundreds or thousands of probes, sensors, and transducers found in aircraft, or the tens of thousands of probes, sensors, and transducers that may be found in ships.

The problem that was previously observed with the management of probes/transducers in a very large-scale system was the lack of any standard communication interface enabling communication between the physical layer of the transducer to some network capable communication device to provide communication from the probe/transducer to the underlying network. A standard that has been in development for some years is the IEEE 1451 standard that seeks to standardize the communication protocols and interfaces between the probe/transducer and the network capable communication component. The probes defined in IEEE 1451 are generally smart probes that include self-configuring, self-aware probes that have processing power for performing more logic at the point of the probe/transducer.

The growth of wireless technology has now lead to wireless probes capable of being placed in remote locations that do not require land-line connections to the monitoring system. For example, many environmental monitoring systems have been implemented using wireless probes placed in remote locations that measure limited amounts of data regarding pollutants or other environmental problems, and transmit that data to collection stations for further processing. Because wireless bandwidth for data transmission is relatively limited, these wireless monitoring systems may incorporate many different kinds of bandwidth management protocols to limit the amount of data being transmitted to the processing/collection point. However, these environmental monitoring systems are typically small, having relatively few probes positioned at known locations in the target area. Central monitoring of such a limited system does not present a complex, dynamic problem for probe management solutions. However, as the number of probes increases along with the addition of the mobile element, the ability to maintain effective monitoring and management becomes limited.

Representative embodiments of the present invention are directed to a system for monitoring wireless probes in a monitoring system. By utilizing smart probes, a large amount of processing and decision-making may be shifted to the probe. Moreover, because of its increased processing power, smart probes are capable of performing varying levels of processing on the measured or collected data, thus allowing the amount of data that may need to be transmitted over the limited wireless data bandwidth to be reduced.

The representative embodiments of the monitoring system may place smart probes at any various mobile or fixed locations. Becausethe smart probes also have a mobile element, multiple intermediate communication sites may be set up at fixed locations to communicate with the probes to either collect or request measurements. However, instead of attempting to control each detailed aspect of every probe from a central station, servers located at the multiple intermediate communication sites may be leveraged to create a distributed network of fixed locations that may interact with the mobile probes that may pass within those fixed locations. Therefore, a central location may broadcast certain measurement requests to the servers at the intermediate communication site locations which then broadcast the requests to individual probes within the communication site locations coverage area. The multiple intermediate communication sites may or may not be aware of the management system. In some embodiments, the multiple intermediate communication sites may just be used to communicate detailed information to and from the central location. In such systems, the intermediate communication sites may comprise elements such as routers, firewalls, base stations, and the like.

Because the probes have greater processing capabilities, the probes may determine, after receiving the measurement requests, whether its capabilities and availability allow it to take part in any or all of the requested measurements. Furthermore, if the probe determines that it has the capability to participate, the probe may configure itself to take the measurements that it is capable of and begins to take those measurements. After any processing is performed by the probe on the measurement data, the processed data may then be transmitted to the intermediate communication sites for aggregation up to the central server location. In this manner, the central server issues measurement requests and then processes data. It does not have to specifically direct the probes to do one thing or another or configure the probes to perform the desired tasks. Therefore, much of the complexity of directing numerous probes from a central server location, where the probes are at different locations and have different capabilities, is relieved.

In alternative embodiments, the intermediate communication sites may participate in processing the measurement requests in such a manner that the intermediate communication sites sends certain measurement requests to specific probes that have the capability to perform the requested measurement.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

For a more complete understanding of the present invention, reference is now made to the following descriptions taken in conjunction with the accompanying drawing, in which:

FIGURE 1 is a diagram illustrating a cellular network monitored by a diagnostic system configured according to one embodiment of the management system described herein;

FIGURE 2 is a diagram illustrating a diagnostic system configured according to another embodiment of the present invention; and

FIGURE 3 is a diagram illustrating a wireless probe management system 30 configured according to another embodiment of the present invention

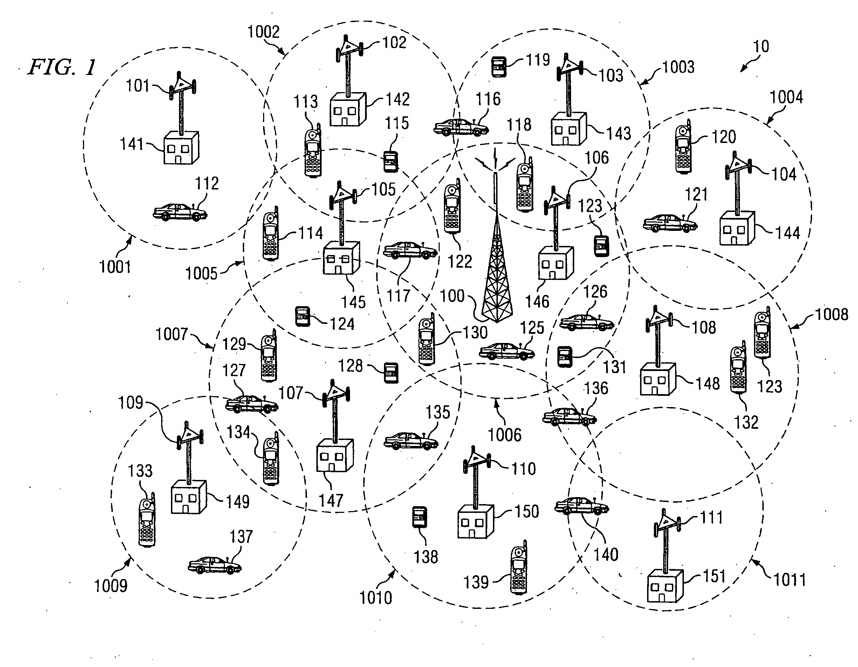

FIGURE 1 is a diagram illustrating cellular network 10 monitored by a diagnostic system configured according to one embodiment of the management system described herein. Cellular network 10 is populated with multiple base stations 101 - 111. Base stations 101 - 111 create coverage cells 1001 -1011 in which cell phones and other communication devices that may connect into cellular network 10 may establish connections. In order to maintain the condition of cellular network 10, a monitoring system configured according to one embodiment of the present invention is established to monitor cellular network 10. Things such as radio frequency (RF) signal strength, network load, cell overlap, and the like are typical conditions that may be examined to determine the status of any given cellular network, such as cellular network 10.

The monitoring system includes central processing station 100 that initiates various diagnostic tests, collects information concerning the health of cellular network 10, and performs various analyses on the collected information. To retrieve and perform the measurements of the network conditions, multiple smart probes, smart probes 112 - 140, are included in various mobile platforms such as automobiles, cell phones, wireless email devices, and the like. As the devices, in which smart probes 112 - 140 are located, communicate with base stations 101 - 111 to connect into cellular network 10, smart probes 112 - 140 opportunistically transmit or receive information from intermediate monitor servers 141 - 151. Intermediate monitor servers 141 - 151 may then communicate the collected information to central processing station 100 or receive instructions from central processing station 100 to communicate to the various ones of smart probes 112 - 140 traveling through a related one of coverage cells 1001 - 1011. This relationship creates a distributed monitoring system from central processing station 100 to smart probes 112 - 140 through intermediate monitor servers 141 - 151.

Prior monitoring systems may have transmitted specific instructions from a central location to an end transducer for configuring that transducer for a specific task. The central location may have then issued specific instructions to the transducer to measure a particular condition for a particular amount of time and in a particular manner. This centralized system becomes extremely complex with the number of mobile probes, smart probes 112 - 140, shown in FIGURE 1. Therefore, instead of "micromanaging" smart probes 112 - 140, central processing station 100 broadcasts experiments or a set number of specific measurement requests to select ones or all of intermediate monitor servers 141 - 151, depending on the condition of cellular network 10 desired for analysis. Intermediate monitor servers 141 - 151 may then transmit those measurement requests to the ones of smart probes 112 -140 that may be passing through the corresponding coverage cells 1001 - 1011. The ones of smart probes 112 - 140 that receive those measurement requests will then analyze the requests to determine whether it is capable of performing the requested measurement.

In operation, it may be observed that cell calls in coverage cell 1007 are frequently dropped. The service provider may desire to test or analyze coverage cell 1007 to determine what, if anything, is going wrong there. An experiment may be developed that includes measurement requests to find out the RF signal strength of base station 107 across coverage cell 1007, the azimuth of the signal in coverage cell 1007, the amount of traffic connected in coverage cell 1007 over a given period of time, and other measurements of specific conditions that may indicate a problem with the connection in coverage cell 1007. The experiment, which is the collection of different measurement requests, is then transmitted from central processing station 100 to intermediate monitor servers 145 - 150. Because smart probes 112 - 140 are mobile, the experiment is transmitted to the ones of intermediate monitor servers 141 - 151 that may be adjacent to or within a predetermined distance of coverage cell 1007 and intermediate monitor server 147. Therefore, even though smart probe 137 is currently traveling through coverage cell 1009, it may be heading towards coverage cell 1007 where the measurements are desired.

As shown in FIGURE 1, smart probes 124, 125, 127 - 130, 134, and 135 are each, at least partly, in coverage cell 1007. Upon receiving the experiment from intermediate monitor server 147, or any of the adjacent intermediate monitor servers, each of smart probes 124, 125, 127 - 130, 134, and 135 determines whether or not it can participate in the experiment. For purposes of this example, fictitious conditions are assigned to each of smart probes 124, 125, 127 - 130, 134, and 135. To begin with, smart probe 124 is in a device that has been switched off. Therefore, smart probe 124 determines that it cannot participate in the experiment. Smart probe 125 uses a location application, which may be facilitated by some Global Positioning System (GPS) functionality, that it is imminently headed out of coverage cell 1007. Smart probe 125, thus, concludes that it is also not available to participate in the experiment. Smart probe 127 determines that it is fully within coverage cell 1007 and that it has transducing capabilities to measure each of the conditions requested in each of the measurement requests of the experiment. Smart probe 127 would then begin self-configuring for measuring the condition of the first request. Once configured, smart probe 127 would begin to take the desired measurements of coverage cell 1007.

Smart probe 128 determines that it is within coverage cell 1007 and has the capabilities to measure only the RF signal strength. Smart probe 128 would then configure itself to measure the RF signal strength and begin taking the desired measurements. Thus, smart probe 128 participates in the experiment, but only to the extent of its own capabilities. Smart probe 129 determines that it is within coverage cell 1007 and that it has the capabilities to perform each of the measurement requests. However, at the moment, the device in which smart probe 129 is located, is in use, taking up the majority of available bandwidth and processing power available to it. Smart probe 129, thus, determines that it is capable of participating in the experiment, but initiates a delay until it can configure itself and begin taking the desired measurement.

Smart probe 130 determines that it is within coverage cell 1007, that it has the capabilities to fully participate in all of the measurement requests of the experiment, and that it has the necessary processing capabilities and battery power to perform those measurements After self-configuring for the particular measurement requests, smart probe 130 begins taking measurements. Similarly, smart probe 134 determines that it is within coverage cell 1007 and that it has the capabilities to fully participate in all of the measurement requests of the experiment. However, as it checks its battery power, smart probe 134 determines that it does not have sufficient battery power to perform the requested measurements and still leave sufficient battery power for operation of its underlying device. Smart probe 134 then concludes that it cannot participate in the experiment. Therefore, after transmitting the experiment to smart probes 124, 125, 127 - 130, 134, and 135, smart probes 127, 129, and 130 will be taking the measurements for each of the measurement requests of the experiment, with smart probe 128 only taking a measurement for the RF signal strength.

Additional smart probes from outside of coverage cell 1007 may also participate in the experiment as they cross into coverage cell 1007. However, the task of populating the participating probes for the experiment does not completely fall onto central processing station 100 or on intermediate monitor servers 145 - 150. The processing capabilities of the smart probes is leveraged for that task.

In additional embodiments of the probe management system described herein, individual smart probes may determine participation in various experiments based on a random number check. In cases where a large number of smart probes are available, it may request only a percentage of those probes to participate. In reference to FIGURE 1, seven smart probes (124, 127 - 130, 134, and 135) are potentially available to participate in any given experiment directed within coverage cell 1007. For purposes of illustrating the present example, an experiment being conducted within coverage cell 1007 requires only a few participants. After each of smart probes 124, 127 - 130, 134, and 135 check their availability to participate in the experiment, each one selects a random number, for instance, a random number between 0 and 1. Based on some kind of threshold value that relates, in some way, to the percentage of smart probes that are desirable to participate in the experiment, such as 0.5, if the random number is over the threshold value, the particular smart probe will participate, while random numbers lower than the threshold amount would not participate.

In additional embodiments, there may be a capability for the smart probes, such as smart probes 124, 127 - 130, 134, and 135, to learn how many probes are already participating in the experiment. In these embodiments, a statistical participation scheme may be made dynamic, wherein the more probes that are already participating, the higher the threshold for determining additional probes to also join in the experiment. For example, if a large number of probes are already participating, the smart probe may set the threshold probability to 0.01 or a 1% chance that the probe will participate in the experiment. Conversely, if few probes are participating the threshold probability may be set to a higher number such as 20% or 50%, or other similar high probability.

Selected embodiments that may implement a capability for informing smart probes of other probes that may be participating in the experiment may do so by using an acknowledgement system run by the intermediate servers, such as intermediate server 147. For example, as each smart probe determines that it will participate in the experiment, the intermediate server will keep a record of the participating probes. Therefore, probes, such as smart probes 124, 127 - 130, 134, and 135, that receive a request to participate may either receive or request from intermediate server 147 the list of probes already participating. Using this information, the smart probes may determine any statistical participation thresholds.

Additional embodiments of the management system may facilitate probe-to-probe communication. Thus, finding out other participating probes, as described in a different embodiment above, may be accomplished by individual probes, such as smart probes 124, 127 - 130, 134, and 135, polling each other to determine that information. Wireless capabilities, such as Bluetooth, IEEE 802.11, or the like, may already exist within the probe. Therefore, the probes may communicate with each other when with an appropriate range exchanging different conditions or participation states.

As smart probes 127 - 130 take the measurements for the experiment, the time and location, along with the measured quantity at the point of measurement are recorded. That data is generally transmitted back to central processing station 100 for ultimate processing and analysis of the potential call-dropping problem observed in coverage cell 1007. However, the bandwidth in cellular network 10 is limited for data transmissions. Therefore, in order to efficiently get the measured data back to central processing station 100, a variety of transmission algorithms may be used by smart probes 127 - 130. For example, the time, location, and measurement data may be stored locally on the devices carrying smart probes 127 - 130 to be transmitted on off-peak hours, when the available bandwidth for data transmission is greater. The data would be transmitted to any one of intermediate monitor servers 141 - 151 depending on where smart probes 127 - 130 are located at that time. From there, the data could be transmitted wirelessly or there may be a landline connection between intermediate monitor servers 141 - 151 to central processing station 100, in which data communication bandwidth is much greater.

Another example algorithm, described in commonly-assigned, co-pending U.S. Patent Application Serial Number 10/698,292, filed October 31, 2003, entitled "BANDWIDTH MANAGEMENT USING STATISTICAL MEASUREMENT," the disclosure of which is incorporated herein, teaches that, as the raw measurements are taken of the specific condition, instead of saving and transmitting the raw data, statistical data is calculated on the smart probe for transmission back to central processing station 100. By processing all of the raw measurements into statistical variables that can be further processed and aggregated at central processing station 100, the value of a large number of measurements may be transmitted without unduly taxing the limited bandwidth restrictions.

It should be noted that a number of different bandwidth sensitive algorithms may be used either alone or in combination to efficiently transmit measurement data while making the most efficient use of the bandwidth limitations of wireless transmission of data.

In additional embodiments of the present invention, experiments and corresponding measurement requests may be divided into compatibility groups at intermediate monitor servers 141 - 151. In cellular network 10, as devices pass in and out of coverage cells 1001 - 1011, each one registers with the corresponding base station 101 - 111. By adding a small amount of information to the registration process, intermediate monitor servers 141 - 151 may be able to keep track of which of smart probes 112 - 140 are located within their corresponding coverage cell 1001 - 1011 along with the capabilities of each of such smart probes 112 - 140. In reference to the above example, smart probe 128 was only capable of measuring RF signal strength. In the described additional embodiment, intermediate monitor server 147 would have a record that smart probe 128 only had that capability and, thus, would only send the measurement request for measuring RF signal strength to smart probe 128, thus, conserving smart probe 128's processing power. Similarly, intermediate monitor servers 141 - 151 would determine which of smart probes 112 - 140 are within range and what their capabilities are, and only transmit the measurement requests that match those capabilities.

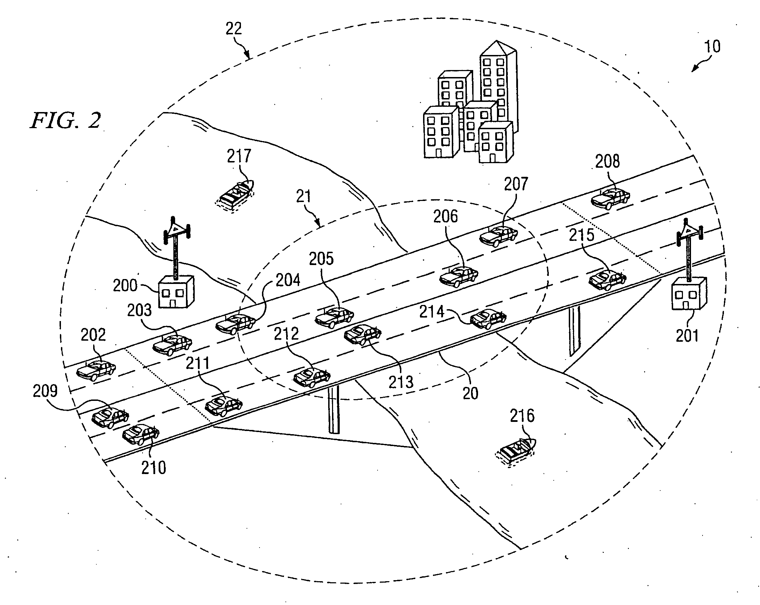

FIGURE 2 is a diagram illustrating a diagnostic system configured according to another embodiment of the present invention. The geographic area covered by cellular network 10 includes bridge 20. Observations by cellular customers indicate that dead spot 21 is located in the middle of bridge 20 that causes phone calls to be dropped and signal to be lost. Because no recognizable signal exists in dead spot 21, smart probes cannot be contacted to perform measurements in dead spot 21 while passing through that location. In order to accommodate this limitation, the monitor network defines broadcast zone 22 in which intermediate monitor servers 200 and 201 broadcast measurement requests to smart probes that pass through the coverage zones of intermediate monitor servers 200 and 201. Smart probes 202 - 208 each passed through the coverage zone of intermediate monitor server 201 prior to crossing bridge 20 into dead spot 21. If any of smart probes 202 - 208 determine that they may participate in the measurement requests, measurements are taken in dead spot 21 which, after exiting dead spot 21, may be transmitted either in processed or unprocessed form to other intermediate monitor servers, such as intermediate monitor server 200. Similarly, smart probes 209 - 215 each receive measurement requests from intermediate monitor server 200 prior to crossing bridge 20 into dead spot 21. Using the measurements taken by smart probes 202 - 217, the service provider may modify cellular network 10 to correct dead spot 21 and increase continuity of coverage.

In each such example illustrated in FIGURES 1 and 2, much of the processing and physical layer management occurs at the smart probes. The central server initiates the experiments and the corresponding measurement requests that are communicated to the intermediate servers and also performs the final analyses on the data or aggregated data received from the smart probes. Therefore, the complexity of the management of such a large-scale, mobile monitoring system is distributed among the various parts of the system. This distribution allows for efficient management of the monitoring system and the system that is being monitored.

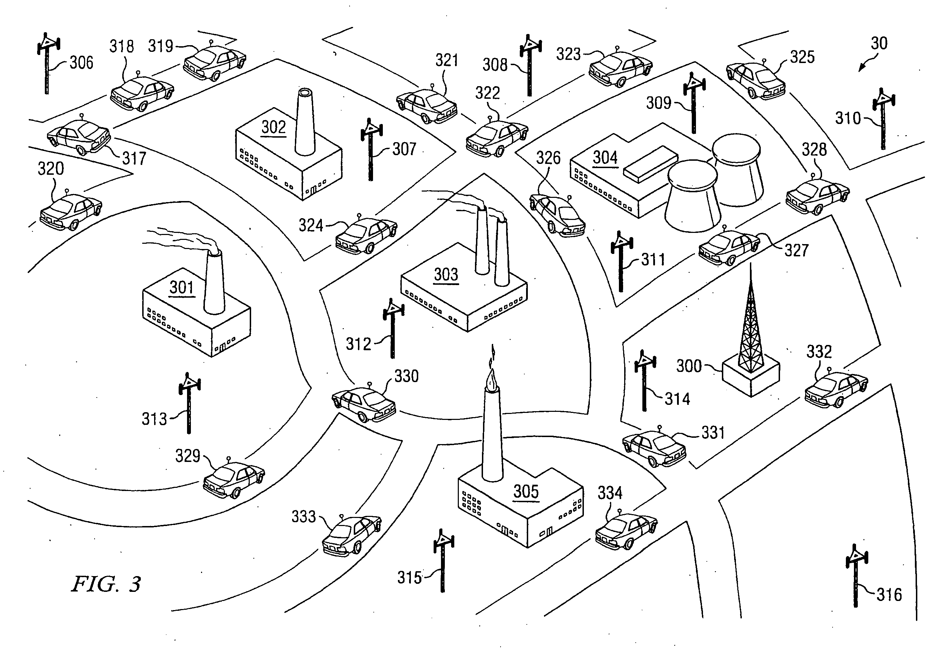

FIGURE 3 is a diagram illustrating wireless probe management system 30 configured according to another embodiment of the present invention. Probe management system 30 is directed to managing probes 317 - 334 to monitor environmental conditions caused by industrial sites 301 - 305. As central monitor station 300 determines different measurement experiments to implement, it sends the experiment requests to relevant ones of probes 317 - 334 through intermediate communication centers 306 - 316. In the embodiment shown in FIGURE 3, each of probes 317 - 334 includes Bluetooth technology in addition to its cellular communication capabilities. Using the Bluetooth technology, probes 317 - 334 may communicate with one another regarding information related to an experiment or any kind of measurement request or the like.

In example operation, central monitor station 300, transmits an experiment with requests for measurements of particulate matter in the proximity of industrial site 304. Using intermediate communication centers 308 - 311, the experiment is transmitted to probes 321 - 323 and 325 - 328. Probes 327 and 328 begin taking the requested measurements for the experiment. As probe 326 begins determining its participation, it checks its availability and then communicates with probes 327 and 328 to find out the participation level in the transmitted experiment. With only two probes actively participating, probe 326 sets a participation threshold of 60%. After generating a random participation number that exceeds the threshold, probe 326 also begins taking the requested measurements.

As probes 323 and 325 begin determining participation, they establish communication with each other, but are out of range of any other probes. Probe 323 immediately determines that its battery power is insufficient to participate and proceeds with normal activity. With only the information that probe 323 is not participating in the experiment, probe 325 chooses to participate and begins taking measurements.

Probes 321 and 322 come into range of probe 326 and finds out the known level of participation in the experiment. After determining that they are capable of participating, each sets lower threshold values for participation. Probe 321 generates a participation number that exceeds the threshold value and begins taking measurements. Probe 322, however, generates a participation number that falls within the threshold and, therefore, does not participate in the experiment. Thus, central monitor station 300 receives measurement data from participating probes 321 and 325 - 328.

Additional embodiments of the present invention may use the random number generation capabilities as well as the processing capabilities of the probes to customize desired experiments. For example, in a cellular communication network, it may be very beneficial to measure data during peak or busy network periods. However, it may not be possible or practical to utilize probes during such times. By utilizing the capabilities of the probes, a peak or busy event may be created during an off-peak time. Referring again to FIGURE 1 for purposes of this example, the provider network desires to test coverage cell 1006 under a high traffic load. Instead of tapping into the capabilities of the smart probes as they travel through coverage cell 1006 during a peak traffic time, an experiment is developed for an off-peak time, such as during the middle of the night. Central processing station 100 transmits an experiment with measurement requests and task requests to each of the smart probes that are located within coverage cell 1006, namely smart probes 117, 118, 122, 124 - 126, 130, and 131.

The experiment transmitted by central processing station 100 includes measurement requests and task requests. Because coverage cell 1006 is desired for testing during a peak traffic time, the task request requests some smart probes to transmit at coverage cell 1006 to stress the network. During this stress period, other smart probes are requested to perform measurement tasks in order to determine the state of the network during the high-traffic period. The experiment lists the measurements as role A and the network stressing as role B. When analyzing the experiment, smart probes 117, 118, 122, 124- 126, 130, and 131 establish a threshold level in which random numbers generated below that threshold performs role A, while random numbers generated above the threshold performs role B. Thus, statistically half of smart probes 117, 118, 122, 124 - 126, 130, and 131 may stress the network, while the other half may take the requested measurements.

In selected embodiments, a weight could also be applied to one or more of the different tasks or roles within a single experiment. Therefore, if more smart probes are needed to stress the network than to take measurements, the threshold may be lowered or weighted more for the probes to participate in stressing the network. It should be noted that any combination of different weights or tasks may be implemented in the different embodiments of the probe management system described herein.

## Claims

1. A monitoring system 30 comprising:
a central processing server 100, 300, wherein said central processing server performs one or more of:
issues measurement requests for measuring conditions of a monitored area 22; and
processes data received in response to said measurement requests;
a plurality of intermediate monitor sites 141-151, 200, 201 communicatably connected to said central processing server for relaying said measurement requests; and
a plurality of smart probes 112-140, 202-215. 317-334 in communication with said plurality of intermediate monitor sites for measuring said data in response to said measurement request, wherein each one of said plurality of smart probes determines a set of conditions for said each one prior to said measuring.

2. The monitoring system 30 of claim 1 wherein said set of conditions comprises one or more of:
availability of said each one to take said measurement request;
capability of said each one for taking said measurement request; and
a configuration of said each one needed to take said measurement request.

3. The monitoring system 30 of claim 1 or 2 wherein said central processing server 100, 300 further issues task requests for influencing a condition of said monitored area 22 and wherein said plurality of smart probes 112-140, 202-215, 317-334 perform tasks in response to said task request relayed from said plurality of intermediate monitor sites 141-151, 200, 201.

4. The monitoring system 30 of any preceding claim wherein said plurality of smart probes 112-140, 202-215, 317-334:
generates a random participation number for participating in one or more of said measurement request;
compares said random participation number to a participation threshold; and
determines participation in said measurement request according to said comparison.

5. The monitoring system of any preceding claim further comprising:
a transceiver disposed within said plurality of smart probes 112-140, 202-215, 317-334, wherein said transceiver enables communication between said plurality of smart probes.

6. A method for monitoring a measurement system 30 comprising:
issuing an experiment from a central server 100, 300 to a plurality of intermediate monitoring stations 141-151, 200, 201;
transmitting said experiment to a plurality of smart probes 112-140, 202-215, 317-334;
determining at said plurality of smart probes a set of tasks for completing said experiment;
performing said set of tasks; and
transmitting data resulting from said performing step to said central server.

7. The method of claim 6 further comprising:
determining at said plurality of smart probes 112-140, 202-215, 317-334 an availability to perform said set of tasks; and
determining at said plurality of smart probes a capability of performing each of said set of tasks.

8. The method of claim 6 or 7 wherein said experiment relates to conditions existing in select portions of said measurement system 30.

9. The method of any of claims 6 to 8 further comprising:
processing into said data, at said plurality of smart probes 112-140, 202-215, 317-334, measurements taken in said performing said set of tasks.

10. The method of any of claims 6 to 9 further comprising:
communicating between said plurality of smart probes 112-140, 202-215, 317-334 to divide performance of selected tasks of said set of tasks between selected smart probes of said plurality.
